# EUROPEAN PATENT SPECIFICATION

(11) **EP 1 462 295 B1**
(45) Date of publication and mention of the grant of the patent: **23.01.2008**
(21) Application number: 04006963.5
(22) Date of filing: 23.03.2004
(51) Int. Cl.: B60K 35/00

(54) **Onament and indicator panel for vehicle interior**
Anzeige- und Verzierungstafel für Fahrzeuginneres
Planche d'ornement et d'affichage pour l'intérieur de véhicule

(30) Priority: 26.03.2003 JP 2003085438
(43) Date of publication of application: 29.09.2004
(73) Proprietor: Calsonic Kansei Corporation, Tokyo 164-8602 (JP); Kimoto Co., Ltd., Shinjuku-ku, Tokyo 160-0022 (JP)
(72) Inventor: Miyanishi, Tetsuto, Tokyo 164-8602 (JP); Ohta, Tetsuji, Chuou-ku Saitama-shi Saitama 338-0013 (JP)
(74) Representative: Grünecker, Kinkeldey, Stockmair & Schwanhäusser Anwaltssozietät

(56) References cited:
- US-A- 6 165 593
- PATENT ABSTRACTS OF JAPAN vol. 2000, no. 21, 3 August 2001 (2001-08-03) & JP 2001 088430 A (KIMOTO & CO LTD), 3 April 2001 (2001-04-03)
- PATENT ABSTRACTS OF JAPAN vol. 2002, no. 06, 4 June 2002 (2002-06-04) & JP 2002 059078 A (NISSHIN STEEL CO LTD), 26 February 2002 (2002-02-26)

## Description

### BACKGROUND OF THE INVENTION

### FIELD OF THE INVENTION

The present invention relates to an indicator panel, which is illuminated by backlighting, for a vehicle.

### DESCRIPTION OF THE RELATED ART

It is generally known to provide an instrument panel disposed in an occupant compartment of a vehicle and in front of seated occupants therein. The Instrument panel is provided with an indicator panel including meters or gages such as a speedometer, engine tachometer and the like. The indicator panel is provided with a base substrate and an ink-acceptance layer coated thereon. A plurality of indicia such as numerals and scales are printed on the ink-acceptance layer. Japanese Patent Application Laid-open No. 2002-98558 discloses a related art for using a digital printer to printing the indicia on the ink-acceptance layer.

JP-A-2001-088430 discloses an ink jet recording material, which comprises an ink-receiving layer containing a water-soluble or hydrophilic resin, said ink-receiving layer further containing a benzotriazole derivative.

JP-A-2002-059078 discloses a print-coated metal plate, which comprises a metal plate having provided thereon a top coat layer. A primer layer and a base coat layer may be provided between the metal plate and the top coat layer. The top coat layer may contain an ultraviolet-absorbing agent, which may be a benzotriazole compound or a triazine compound.

### SUMMARYOF THE INVENTION

Conventional ink-acceptance layers have relatively low light resistance and is hence easy to be faded by ultraviolet rays contained in solar rays. Improvement of the light resistance leads to reduction of clearness of the printed indicia.

The present invention is intended for providing an indicator panel having improved light resistance and ensuring clear print.

The present invention provides an indicator panel for a vehicle comprising:
a base substrate (30) having transparency,
an ink-acceptance layer (33, 34) coated on at least one surface of the base substrate (30), the ink-acceptance layer (33, 34) Including from 7 weight % to 15 weight % of one or more benzotriazole series compounds,
wherein the benzotriazole series compounds are selected from the group of,
   phenyl-5-benzotriazole carboxylate,
   methyl-5-benzotriazole carboxylate,
   phenyl-1-{4-hydroxy-3-[N-(2-tetradecyloxyphenyl) carbamoyl]-1-naphthyloxymethyl}-1H-benzotriazolo-5-carboxylate,
   phenyl-1-{4-hydroxy-3-[N-(2-tetradecyloxyphenyl) carbamoyl]-1-naphthyloxymethyl}-1H-benzotriazole-6-carboxylate,
   5-benzotriazole carboxylate,
   benzotriazole-5-carboxylate,
   1-alkyloylbenzotriasole where a carbon number of alkyloyl group is from 8 to 24,
   1-alkenoylbenzotriazole where a carbon number of alkenoyl group is from 8 to 24, and
   benzotriazole series compounds having a constitutional unit of polyalkylene glycol and
a printed layer (35, 36) printed on the ink-acceptance layer (33, 34).

Preferably, a content of the benzotriazole series compounds to the ink-acceptance layer is from 9 weight % to 13 weight %. More preferably, the printed layer is printed by an ink-jet printing method.

### BRIEF DESCRIPTION OF THE DRAWINGS

Fig. 1 is a front view of an indicator panel for a vehicle according to an embodiment of the present invention;
Fig. 2 is a schematic illustration of a cross section of the indicator panel, showing the vicinity of indicia printed thereon;
Fig. 3 is a graph of UV exposure test results regarding ink-acceptance layers;
Fig. 4 is a graph of UV exposure test results regarding printed layers of comparative examples; and
Fig. 5 is a graph of UV exposure test results regarding printed layers of examples according to the present invention.

### DETAILED DESCRIPTION OF THE PREFERRED EMBODIMENT

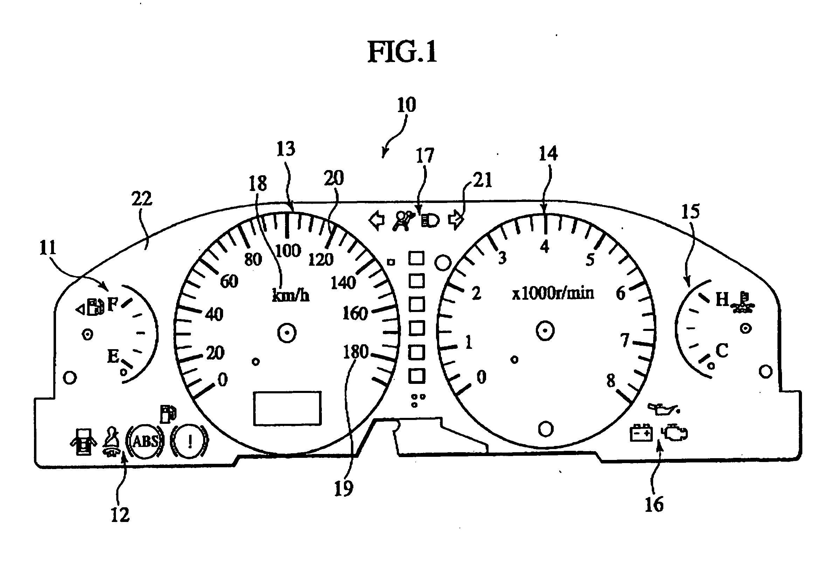

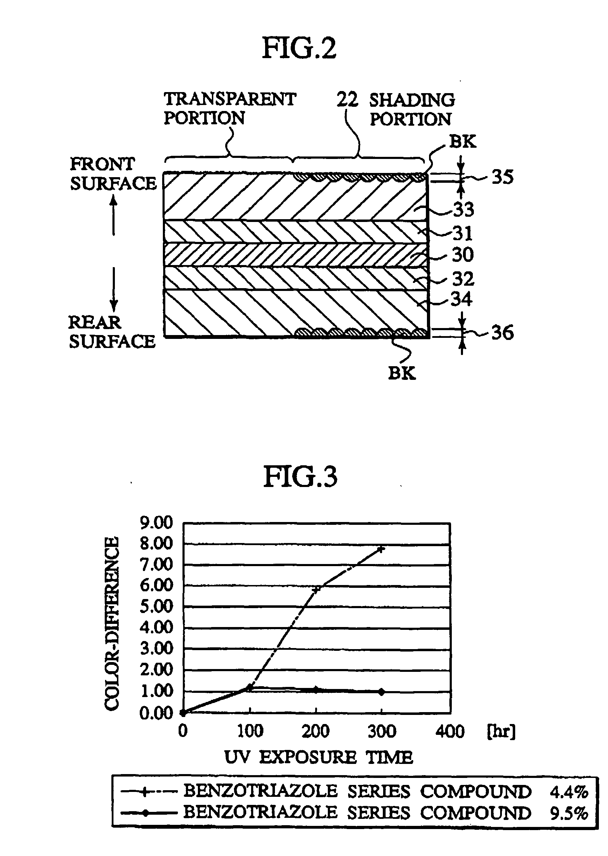

An embodiment of the present invention will be described hereinafter with reference to Figs. 1 and 2.

An indicator panel 10 for a vehicle instrument panel is provided with a fuel meter 11 on the left hand thereof and first warning indicators 12 below the fuel meter 11 as shown in Fig. 1. A speedometer 13 and an engine tachometer 14 are disposed in the middle thereof. A coolant thermometer 15 and second warning indicators 16 are disposed on the left hand. Third warning indicators 17 are further provided between and above the speedometer 13 and the engine tachometer 14.

A plurality of indicia such as letters, numerals, scales and characters are printed on the indicator panel 10. For example, the speedometer 13 includes letters 18 such as "km/h", numerals 19 such as "180" indicating speeds and scales 20. The third warning indicators 17 include arrows 21 for a turn signal. A background portion excepting the indicia is a shading portion 22 colored in black or such a dark color.

The indicator panel 10 can be generally classified into three groups. First of them is a group of transparent portions of letters 18, scales 20 and such, which have transparency so as to show desired illumination colors in a case where a backlight is turned on. Second is a group of the first through third warning indicators 12, 16 and 17, which are colored in similar colors with the shading portion 22 but show illumination colors when a backlight is turned on so that the occupants become aware of the warning only when the backlight is turned on. Third is the shading portion 22 which have no indicia and opacity.

A cross section of the indicator panel 10 is schematically shown in Fig. 2, in which the vicinity of indicia and warning indicators is enlarged. Front and rear surfaces of the indicator panel 10 are respectively drawn in upper and lower parts of Fig. 2. Left part of Fig. 2 shows a transparent portion such as the letters 18 and the scales 20. Right part of Fig. 2 shows a shading portion 22 which have no indicia and opacity.

The transparent portion is provided with a base substrate 30, a pair of anchor layers 31 and 32 formed on both sides thereof and a pair of ink-acceptance layers 33 and 34 formed further on both sides thereof. The shading portion 22 is formed in the same sectional structure as the transparent portion and further provided with a pair of printed layers 35 and 36 respectively formed on the ink-acceptance layers 33 and 34.

A base substrate 30 is made of a transparent synthetic resin such as polycarbonate (PC), polycarbonate ABS and ABS. The anchor layers 31 and 32 and the ink-acceptance layers 33 and 34 can be coated with utilising a coater or by means of a screen printing method. Frequency of coating or printing requires no limitation. The anchor layers 31 and 32 are respectively about 2 µm in thickness. The ink-acceptance layers 33 and 34 are respectively around 20 µm in thickness.

The ink-acceptance layers 33 and 34 include resin acceptable of ink. A resin for a conventional ink-acceptance layer of a conventional ink-jet recording medium can be applied to the present ink-acceptance layers 33 and 34, More preferably, water-soluble or hydrophilic resin having a high absorbency for water base ink and a waterproof property can be applied. As the ink-acceptable resin, synthetic resins of polyvinyl alcohol, water-soluble cellulose and such, natural resins of gelatin, casein and such can be exemplified. More specifically, water base polyurethane resin having a constitutional unit of a polycarbonate chain is preferable in view of light resistance. The ink-acceptance layers 33 and 34 preferably includes more than 25 weight % of, more preferably more than 50 weight % of, the water base polyurethane resin having a constitutional unit of a polycarbonate chain. The water base polyurethane resin having a constitutional unit of a polycarbonate chain can be, for example, obtained by a conventional production method of making polyol including a polycarbonate chain react with diisocyanate and emulsifying the product.

The ink-acceptance layers 33 and 34 include from 7 weight % to 15 weight % of, more preferably from 9 weight % to 13 weight % of, benzotriazole series compounds.

As the benzotriazole series compounds, phenyl-5-benzotriazole carboxylate, methyl-5-benzotriazole carboxylate, phenyl-1-{4-hydroyx-3-[N-(2-tetradecyloxyphenyl) carbamayl]-1-naphthyloxymethyl}-1H-benzotriazole-5-carboxyl ate, phenyl-1-(4-hydroxy-3-[N-(2-tetradacyloxyphenyl) carbamoyl]-1-naphthyloxymethyl)-1H-benzotriazole-6-carboxyl ate, 5-benzotriazole carboxylate, benzotriazole-5-carboxylate, 1-alkyloylbenzotriazole where a carbon number of alkyloyl group is from 8 to 24, 1-alkenoylbenzotriazole where a carbon number of alkenoyl group is from 8 to 24, and benzotriazole series compounds having a constitutional unit of polyalkylene glycol can be exemplified. The ink-acceptance layers 33 and 34 include one or more compounds selected from them.

Among the benzotriazole series compounds, the benzotriazole series compounds having a constitutional unit of polyalkylene glycol are more preferable. More specifically, polyethylene glycol and polypropylene glycol are exemplified as the polyalkylene glycol. Among them, polyethylene glycol is preferably applied. A molecular weight of the polyalkylene glycol requires no limitation, however, is preferably about 300 on an arithmetical average. As the benzotriazole series compounds having a constitutional unit of polyalkylene glycol, a compound represented by a structural formula: 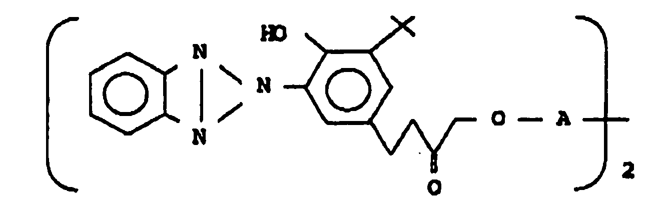 can be exemplified, where A represents polyalkylene glycol. A chemical name thereof is a condensation compound of methyl-3-[3-t-butyl-5-(2H-benzotriazole-2-yl)-4-hydroxyphen yl] propionate and poly alkylene glycol

Such benzotriazole series compounds prevent bronzing though light resistance of the printed layers 35 and 36 is not reduced. The reason is though to be that the compounds are cationic and have absorptivity for ultraviolet rays.

The ink-acceptance layers 33 and 34 may include inorganic pigments such as clay, talc, diatomaceous earth, calcium carbonate, calcium sulfate, barium sulfate, aluminum silicate, titanium oxide, zinc oxide, silicon dioxide, synthetic zeolite, alumina, smectite and such, as well as the aforementioned water-soluble or hydrophilic resin and the benzotriazole series compounds. Such inorganic pigments improve absorbency of the ink-acceptance layers 33 and 34 for ink and prevent blocking. From 5 to 200 weight part of the inorganic pigments is mixed with 100 weight part of the resin. An antifoaming agent, a leveling agent, a light stabilizing agent, a pigment may be added thereto as the need arises.

The printed layers 35 and 36 can be formed by means of anink-jet printing method for example. According to the ink-jet printing method, droplets of black-ink BK for example are countlessly sprayed and hence permeate on the ink-acceptance layers 33 and 34 to form the printed layers 35 and 36 thereon. The shading portion 22 with the printed layers 35 and 36 has enough absorbency for the black-ink BK by means of the ink-acceptance layers 33 and 34 so that the black-ink is prevented from blotting and clearness thereof is ensured. Thereby boundaries between the transparent portion and the shading portion 22 are clearly formed so that clearness of the letters 18 and the scales 20 is ensured. Meanwhile, the ink is not limited to the black-ink BK and various colored inks such as yellow and blue can be applied.

The shading portion 22 which the black-ink permeates in an area rate of 100 % nearly perfectly shields the backlighting lightened from a rear surface of the indicator panel 10. The transparent portion is free from the black-ink, namely black-ink area rate of 0 %.

Next, a production method of the indicator panel 10 according to the present embodiment will be described hereinafter.

First, as shown in Fig. 2, the anchor layers 31 and 32 are respectively coated on both front and rear surfaces of the base substrate 30 at a thickness of 2 µm with a coater for example. Next, the ink-acceptance layers 33 and 34 are respectively coated on the anchor layers 31 and 32 at a thickness of 20µm with a coater and such. The printed layers 35 and 36 are coated on the ink-acceptance layers 33 and 34 at the shading portion 22 with the ink-jet printing method. At the shading portion 22, the black-ink is sprayed on both surfaces thereof so as to be in an area rate of 100 %. At the transparent portion, the black-ink is not sprayed so that the color of the ink-acceptance layers 33 and 34 is in view. After forming the printed layers 35 and 36, moisture contained in the ink-acceptance layers 33 and 34 and printed layers 35 and 36 is thermally dried. Meanwhile, after the aforementioned processes, an overcoat including UV absorbing agent may be further coated thereon.

Examples of the present embodiment of the invention will be described hereinafter.

First, as shown in Fig. 2, anchor layers 31 and 32 were respectively coated on both front and rear surfaces of base substrate 30 made of polycarbonate at a thickness of 2 µm with utilizing a coater. Next, ink-acceptance layers 33 and 34 were respectively coated on the anchor layers 31 and 32 at a thickness of 20 µm with utilizing a coater. The ink-acceptance layers 33 and 34 included benzotriazole series compounds having a constitutional unit of polyalkylene glycol at predetermined concentration (In a case of Table 1, described in the table. In a case of Figs. 3 through 5, 4.4 weight % and 9.5 weight %.) relative to weights of the ink-acceptance layers 33 and 34.

Next, printed layers 35 and 36 were respectively coated on the ink-acceptance layers 33 and 34 at a shading portion 22 with utilizing an ink-jet printing method in yellow and black watercolor pigment inks. After printing, moisture contained therein was thermally dried. Table 1 shows results of clearness evaluation of prints.

The indicator panels of the examples are submitted to an UV exposure test and the results are shown in Table 1 and Figs. 3 through 5. The UV exposure test was achieved by "SUN SHIN SUPER LONGLIFE WEATHER METER" (SUGA TEST INSTRUMENTS Co., Ltd.) without dew cycles and at a black-panel temparature of 83 degree C. Color differences were measured by a chroma meter sold under a trade name of "CR-300" (MINOLTA Co., Ltd.).

**Table 1 UV exposure test results**

| content of the compound (weight %) | 0 | 6 | 7 | 9 | 11 | 13 | 15 | 17 | 22 |
|---|---|---|---|---|---|---|---|---|---|
| light resistance | bad | bad | bad | good | good | good | good | good | good |
| clearness of prints | good | good | good | good | good | good | mid. | bad | bad |

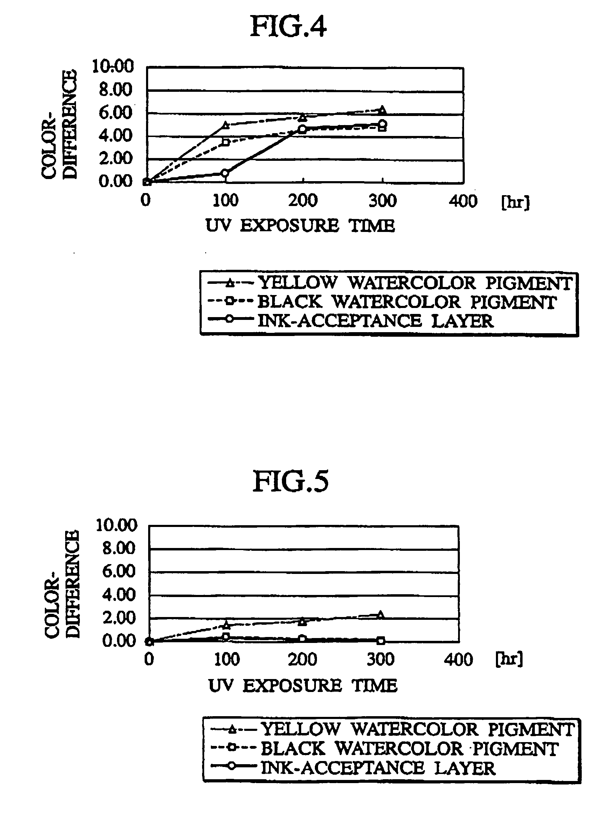

Fig. 3 shows color-difference change with UV exposure time regarding the examples having the ink-acceptance layers 33 and 34. Figs. 4 and 5 show color-difference change with UV exposure time regarding the examples having the printed layers 35 and 56 with watercolor pigment ink. Fig 4 is concerning with a case where the ink-acceptance layers include 4.4 weight % of benzotriazole series compounds (comparative examples) and Fig. 5 is concerning with a case where the ink-acceptance layers include 9.5 weight % of benzotriazole series compounds (examples of the present invention).

As being understood from Fig. 3, the examples of the present invention, where the ink-acceptance layers 33 and 34 include 9.5 weight % of benzotriazole series compounds, have far lower color-difference changes than the comparative examples, where the ink-acceptance layers 33 and 34 include 4.4 weight % of benzotriazole series compounds. Therefore improvement of light resistance becomes clear. More specifically, the improvement of light resistance of the examples of the present invention reaches 87 % compared with the comparative examples. Furthermore, as being understood from Figs. 4 and 5, improvement of light resistance regarding the indicator panels having the printed layers 35 and 36 becomes clear.

## Claims

1. An indicator panel for a vehicle comprising:
a base substrate (30) having transparency
an ink-acceptance layer (33, 34) coated on at least one surface of the base substrate (30), the ink-acceptance layer (33, 34) including from 7 weight % to 15 weight % of one or more benzotriazole series compounds,
wherein the benzotriazole series compounds are selected from the group of,
phenyl-5-benzotriazole carboxylate,
methyl-5-benzotriazole carboxylate,
phenyl-1-{4-hydroxy-3-[N-(2-tetradecyloxyphenyl) carbamoyl]-1-naphthyloxymethyl}-1H-benzotriazole-5-carboxylate,
phenyl-1-{4-hydroxy-3-[N-(2-tetradecyloxyphenyl) carbamoyl]-1-naphthyloxymethyl}-1H-benzotriazole-6-carboxylate,
5-benzotriazole carboxylate,
benzotriazole-5-carboxylate,
1-alkyloylbenzotriazole where a carbon number of alkyloyl group is from 8 to 24,
1-alkenoylbenzotriazole where a carbon number of alkenoyl group is from 8 to 24, and
benzotriazole series compounds having a constitutional unit of polyalkylene glycol; and
a printed layer (35, 36) printed on the ink-acceptance layer (33, 34).

2. The indicator panel of claim 1, wherein:
a content of the benzotriazole series compounds to the ink-acceptance layer (33, 34) is from 9 weight % to 13 weight %.

3. The indicator panel of claim 1, wherein :
the printed layer (35, 36) is printed by an ink-jet printing method.

## Patentansprüche

1. Anzeigetafel für ein Fahrzeug, umfassend:
ein Grundsubstrat (30) mit Transparenz,
eine Tintenempfangsschicht (33, 34), die auf wenigstens eine Oberfläche des Grundsubstrats (30) aufgebracht ist, wobei die Tintenempfangsschicht (33, 34) 7 Gew.-% bis 15 Gew.-% einer oder mehrerer Verbindungen der Benzotriazolreihe enthält,
worin die Verbindungen der Benzotriazolreihe ausgewählt sind aus der Gruppe
Phenyl-5-benzotriazolcarboxylat, Methyl-5-benzotriazolcarboxylat, Phenyl-1-{4-hydroxy-3-[N-(2-tetradecyloxyphenyl)carbomoyl]-1-naphthyloxymethyl}-1 H-benzotriazol-5-carboxylat, Phenyl-1-{4-hydroxy-3-[N-(2-tetradecyloxyphenyl)-carbamoyl]-1-naphthyloxymethyl}-1H-benzotriazol-6-carboxylat, 5-Benzotriazolcarboxylat, Benzotriazol-5-carboxylat,
1-Alkyloylbenzotriazol mit einer Kohlenstoffzahl der Alkyloylgruppe von 8 bis 24,
1-Alkenoylbenzotriazol mit einer Kohlenstoffzahl der Alkenoylgruppe von 8 bis 24 und
Verbindungen der Benzotriazolreihe mit einer Aufbaueinheit von Polyalkylenglycol, und
eine gedruckte Schicht (35, 36), die auf die Tintenempfangsschicht (33, 34) gedruckt ist.

2. Anzeigetafel nach Anspruch 1, worin der Gehalt von Verbindungen der Benzotriazolreihe zu der Tintenempfangsschicht (33, 34) 9 Gew.-% bis 13 Gew.-% beträgt.

3. Anzeigetafel nach Anspruch 1, worin die gedruckte Schicht (35, 36) durch ein Tintenstrahldruckverfahren gedruckt ist.

## Revendications

1. Tableau indicateur pour un véhicule comprenant :
un substrat de base (30) présentant une transparence ;
une couche d'imprimabilité (33, 34) revêtue sur au moins une surface du substrat de base (30), la couche d'imprimabilité (33, 34) comprenant 7 % en poids à 15 % en poids d'un ou plusieurs composés de la série de benzotriazole,
dans lequel les composés de la série de benzotriazole sont choisis dans le groupe constitué par
le 5-benzotriazole carboxylate de phényle,
le 5-benzotriazole carboxylate de méthyle,
le 1-{4-hydroxy-3-[N-(2-tétradécyloxyphényl)carbamoyl]-1-naphtyloxyméthyl}-1H-benzotriazole-5-carboxylate de phényle
le 1-{4-hydroxy-3-[N-(2-tétradécyloxyphényl)carbamoyl]-1-naphtyloxyméthyl}-1H-benzotriazole-6-carboxylate de phényle
le 5-benzotriazole carboxylate,
le benzotriazole-5-carboxylate,
le 1-alkyloylbenzotriazole dans lequel un nombre d'atomes de carbone du groupe alkyloyle va de 8 à 24,
le 1-alcénoylbenzotriazole dans lequel un nombre d'atomes de carbone du groupe alcénoyle va de 8 à 24, et
des composés de la série de benzotriazole présentant un motif constitutionnel de poly(alkylène glycol) ; et
une couche imprimée (35, 36) imprimée sur la couche d'imprimabilité (33, 34).

2. Tableau indicateur selon la revendication 1, dans lequel :
une teneur des composés de la série de benzotriazole par rapport à la couche d'imprimabilité (33, 34) va de 9 % en poids à 13 % en poids.

3. Tableau indicateur selon la revendication 1, dans lequel :
la couche imprimée (35, 36) est imprimée par un procédé d'impression à jet d'encre.
